# EUROPEAN PATENT SPECIFICATION

(11) **EP 3 902 321 B1**
(45) Date of publication and mention of the grant of the patent: **23.07.2025**
(21) Application number: 19898785.1
(22) Date of filing: 11.12.2019
(51) Int. Cl.: H04W 28/02, H04L 47/125

(54) **LOAD BALANCING METHOD, DEVICE, AND STORAGE MEDIUM**
LASTAUSGLEICHSVERFAHREN, VORRICHTUNG SOWIE SPEICHERMEDIUM
PROCÉDÉ, DISPOSITIF D'ÉQUILIBRAGE DE CHARGE ET SUPPORT DE STOCKAGE

(30) Priority: 21.12.2018 CN 201811573239
(43) Date of publication of application: 27.10.2021
(73) Proprietor: ZTE Corporation, Shenzhen, Guangdong 518057 (CN)
(72) Inventor: ZHAI, Laiguo, Shenzhen, Guangdong 518057 (CN); LI, Rui, Shenzhen, Guangdong 518057 (CN); ZHOU, Xiaodong, Shenzhen, Guangdong 518057 (CN); TIAN, Fei, Shenzhen, Guangdong 518057 (CN); TONG, Zhixin, Shenzhen, Guangdong 518057 (CN)
(74) Representative: Boult Wade Tennant LLP
(86) International application number: PCT/CN2019/124496
(87) International publication number: WO 2020/125508

(56) References cited:
- EP-A1- 2 941 044
- CN-A- 1 592 165
- CN-A- 1 599 471
- CN-A- 105 282 791
- CN-A- 107 396 376
- CN-A- 107 787 016
- US-A1- 2013 028 093
- US-A1- 2018 054 749

## Description

### FIELD OF THE INVENTION

The present disclosure relates to the technical field of communications, in particular to a load balancing method, device, as well as a storage medium.

### BACKGROUND OF THE INVENTION

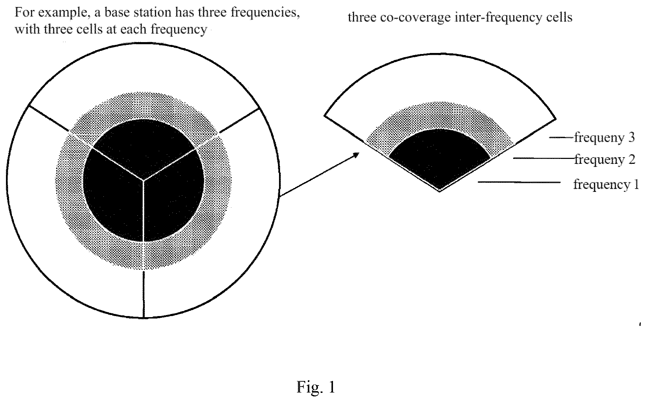

With rapid expansion of users and data services, the long term evolution (LTE) network becomes gradually congested, especially in those high-value hotspots. Therefore, it is possible to alleviate congestion by deploying a plurality of frequencies, that means a plurality of cells with different frequencies collectively cover the same area. The plurality of frequencies herein may be applied in a frequency division duplexing (FDD) mode, and may also be applied in a time division duplex (TDD) mode. The term "collectively cover" does not mean completely identical coverage. As shown in Fig. 1, such co-coverage cells have different frequencies, and are thus commonly referred to as inter-frequency cells. These co-coverage inter-frequency cells generally have difference in coverage radius, but are substantially consistent in terms of coverage orientation, or merely have a subtle deviation in terms of coverage orientation.

When a plurality of cells that have different frequencies are used for coverage at the same time, it is required that users or services can be distributed at various frequencies in a relative balanced manner, so that each frequency can be fully utilized, user experience will be improved, and dynamic adjustment can be performed in various load situations.

As users or services are balanced among a plurality of cells that have different frequencies, in certain situations, there is still a problem of not satisfying dynamic balancing requirements in various load situations.

Europe patent application EP2941044A1 discloses a load balancing method and a network control node. An entity in which a serving cell is located selects a scheduling cell for an edge UE, and instructs the scheduling cell to allocate a data channel for the edge UE, and a control channel is retained in the serving cell and is not handed over. In this way, in a case of being transparent to the UE, an objective of load balancing is achieved by automatic fast coordinating and scheduling without handover. It can be seen that, in the foregoing load balancing manner, a data channel is used as transferring granularity, and a handover time delay does not need to be introduced, thereby implementing a function of fast balancing instantaneous load, and improving load balancing efficiency.

Chinese patent application CN107787016A discloses a load balance-based processing method and apparatus. The method includes the steps of acquiring a parameter of a current group; and determining whether a load of the current group is higher than a preset threshold according to the parameter, and if the load of the current group is higher than the preset threshold, balancing load of the current group. With the group as a basis, the system is more stable, load balancing is not triggered randomly; and the load of the whole network is balanced in a group manner, so that the load of the whole network, rather than a certain region, is further balanced.

### SUMMARY OF THE INVENTION

In order to overcome the above-mentioned disadvantages, the technical problem to be solved by the present disclosure is to provide a load balancing method, a load balancing device, and a storage medium, to realize dynamic balancing of loads of all inter-frequency cells of co-coverage inter-frequency cells inside one base station.

The invention is defined by the appended independent claims and further embodiments are described by the dependent claims.

The above description is merely a summary of the technical solutions of the disclosure. For a better understanding of the disclosure and a simple implementation according to the description, the preferred embodiments of the disclosure will be described by way of examples with reference to the drawings, from which the above and other objects, characteristics and advantages of the disclosure can appear more clearly.

### BRIEF DESCRIPTION OF THE DRAWINGS

By reading the following detailed description of preferred embodiments of the disclosure, various further advantages and benefits thereof will become clear and apparent to those skilled in the art. The drawings are provided for purposes of illustrating preferred embodiments of the disclosure only and are not to be considered limiting its scope. Throughout the drawings, identical or similar reference symbols designate identical or similar elements. In the accompanying drawings:
Fig. 1 is a schematic diagram of an effect of the co-coverage inter-frequency cells in the background technologies;
Fig. 2 is a flowchart of a load balancing method in embodiments of the present disclosure;
Fig. 3 is a diagram of an effect of a first type of load balancing solution in embodiments of the present disclosure;
Fig. 4 is a diagram of an effect of a second type of load balancing solution in embodiments of the present disclosure;
Fig. 5 is a flowchart of an optional load balancing method in embodiments of the present disclosure; and
Fig. 6 is an interaction flowchart of modules in an optional load balancing apparatus in embodiments of the present disclosure.

### DETAILED DESCRIPTION OF THE EMBODIMENTS

Exemplary embodiments of the present disclosure will be described in more detail below with reference to the accompanying drawings. Although the exemplary embodiments of the present disclosure are shown in the accompanying drawings, it should be understood that the present disclosure can be embodied in various forms and should not be limited to the embodiments illustrated herein. In contrast, these embodiments are provided for more thorough understanding of the present disclosure, and for fully conveying the scope of the present disclosure to those skilled in the art.

In the subsequent description, postfixes such as "module", "component" or "unit" for representing elements are only intended for detailed explanation of the present disclosure, and themselves do not have specified meanings. Therefore, the postfixes of "module", "component" or "unit" can be used in combination.

Prefixes such as "first" and "second" for distinguishing elements are only intended for detailed explanation of the present disclosure, and themselves do not have specified meanings.

### Embodiment One

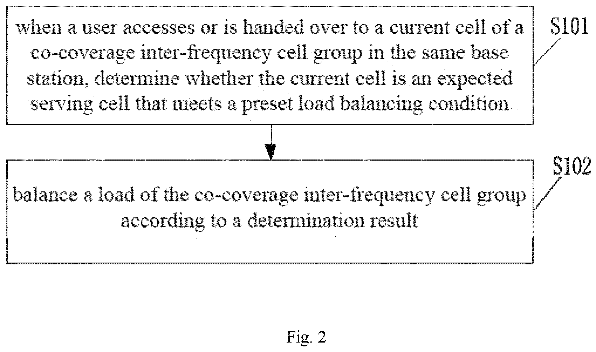

The embodiment of the present disclosure provides a load balancing method, as shown in Fig. 2, which includes the following steps S101 to S102. At Step S101, when a user accesses or is handed over to a current cell of a co-coverage inter-frequency cell group in the same base station, it is determined whether the current cell is an expected serving cell that meets a preset load balancing condition. At step S102, a load of the co-coverage inter-frequency cell group is balanced according to a determination result.

The current cell is a cell that the user first accesses or is first handed over to. The method in the embodiment of the present disclosure can be used in a node device such as a base station.

In the embodiment of the present disclosure, when a user first accesses or is first handed over to a current cell of a co-coverage inter-frequency cell group, whether the current cell is an expected serving cell is determined, so that loads of inter-frequency cells in the co-coverage inter-frequency cell group can be actively balanced according to a determination result, and thus, a load accumulation risk is prevented when the loads are low, and dynamic balancing can still be carried out when the loads are high, thereby satisfying a requirement of the inter-frequency cells for dynamic balancing in various load situations, and also realizing rational distribution of the loads of the inter-frequency cells and rational distribution of users in the inter-frequency cells.

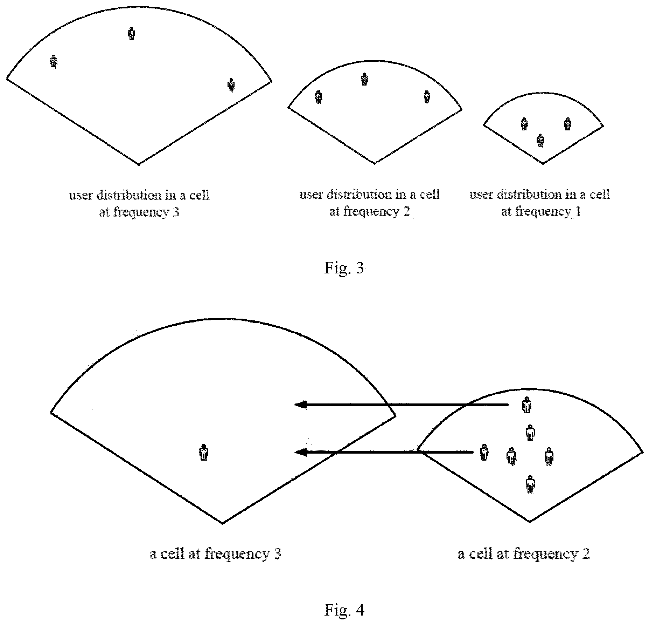

In certain situations, as shown in Fig. 3, it is assumed that the following first type of load balancing solution is used. A plurality of cells that have different frequencies are configured with different reselection priorities, i.e. a cell reselection priority in an LTE air interface system broadcast message (SIB), and the plurality of cells that have different frequencies are then configured with different handover parameters to realize the balancing of inter-frequency cells.

A general principle of setting priorities is that priorities are set according to respective coverage sizes at each frequency, that is, a cell having a relatively small coverage size may be configured with a higher priority. In Fig. 3, a cell having frequency 1 has the highest priority, a cell having frequency 2 has the second priority, and a cell having frequency 3 has the lowest priority.

Different reselection priorities are configured, which causes all users initiating access in a cell having a high priority, and the users are then handed over to other inter-frequency cells by re-configuring a different handover parameter threshold (inter-frequency handover).

The solution has the following problems. 1) In the solution, it is unnecessary to estimate loads of cells, and users are enabled, merely by handover parameter adjustment, to move between the inter-frequency cells; and a target cell would reject handover in a high load situation, which leads to a function failure, and hence, it is hard to satisfy a dynamic balancing requirement in various load situations. 2) Each inter-frequency cell is statically configured with a handover parameter, but, in fact, in order to achieve better balancing, the handover parameter needs to change periodically according to an actual load of the respective cell. 3) As shown in Fig. 3, the users are distributed unevenly in the cell having a relatively low reselection priority, where the users at middle and far points have poor experience, that is, almost all the users at near points are in the cell having a high priority, and almost all the users at the far points are in the cell having the lowest priority.

For another example, it is assumed that the following second type of load balancing solution is used. A plurality of cells having different frequencies are configured with the same reselection priority, and the balancing of the inter-frequency cells are then realized by load balancing.

Load balancing means performing unloading from a high load cell to a low load cell, and the process thereof generally has four steps: 1) selecting a balancing initiation cell, where a cell is qualified for balancing initiation only when a load of the cell satisfies a balancing initiation condition, for example, exceeding a balancing initiation threshold (e.g. a user quantity threshold, PRB utilization rate threshold or a combination threshold); 2) selecting a balanced cell, where neighboring cells need to satisfy a condition for being balanced, for example, each having a load less than a threshold for being balanced, and the balanced cell(s) may be then selected from among these neighboring cells that satisfy the condition; 3) selecting a balanced user group, where a group of users is selected from among existing users in the balancing initiation cell according to certain algorithms; and 4) handing over the selected group of users in the balancing initiation cell to corresponding balanced cells one by one. The various load balancing algorithms mainly include a balanced cell selection algorithm and a balanced user group selection algorithm.

This load balancing solution has the following disadvantages: 1) control is not performed under a low load, allowing risk accumulation; and 2) a failure risk is present under a high load.

Such load balancing tends to be triggered merely when loads of cells exceed an expected threshold, and is passive balancing. Balancing is not initiated when the loads are less than the threshold, which does not satisfy a dynamic balancing requirement in various load situations, resulting in a problem of loads of part of cells accumulating until reaching a trigger threshold.

When all the cells cannot satisfy the condition for being balanced (a load of a balanced cell should below the threshold for being balanced), the algorithm fails, that is, when all the co-coverage inter-frequency cells do not satisfy the condition for being balanced, no balanced cell can be selected, and balancing of the co-coverage inter-frequency cells can no longer be performed. As shown in Fig. 4, a load balancing process is triggered only when the load of the cell having frequency 2 exceeds a designated threshold and the load of the cell having frequency 3 is less than the designated threshold.

By utilizing the method in the embodiment of the present disclosure, the disadvantages of the above-mentioned two solutions can be effectively solved.

In the current invention, the step of determining whether the current cell is the expected serving cell that meets the preset load balancing condition includes:
determining whether the current cell is the expected serving cell that meets the preset load balancing condition according to overall load data of the co-coverage inter-frequency cell group.

Centralized load assessment may be performed on all the inter-frequency cells in the co-coverage inter-frequency cell group to obtain the overall load data of the co-coverage inter-frequency cell group. In the embodiment of the present disclosure, centralized load assessment is the same as overall assessment in terms of meaning. Certainly, the centralized load assessment may be periodically performed, and may also be dynamically updated when users or service loads change. That is, the overall load data of the co-coverage inter-frequency cell group is updated according to a preset update condition, where the update condition is one of a preset update cycle, a user load change and a service load change.

In the embodiment of the present disclosure, different load assessment definitions may be used according to different scenarios. For example, simple load definition approaches may include: 1) a user quantity per bandwidth. Assuming that user behavior models are the same, a user quantity supported by the same bandwidth should be substantially consistent, the user quantity is divided by the bandwidth to obtain the user quantity per bandwidth, and the ratio is taken as a load definition. The approaches may also include: 2) a PRB utilization rate. A PRB utilization rate of a cell is taken as a load definition.

In order to realize rational distribution of users in inter-frequency cells, it is also possible to adopt finer assessment, for example, taking user locations into consideration on the basis of the user quantity per bandwidth, that is, adding a location weight, where location information may be represented by using TA. A load may also be defined by combining several methods, for example, adding a weight to each method to obtain a load definition after comprehensive consideration.

What corresponds to the load definition is a load assessment algorithm, and the embodiment of the present disclosure does not limit a specific load assessment algorithm. For example, it is possible to take an appropriate design by using a filter, selecting a suitable smoothing parameter, so as to avoid abnormal fluctuation of a load sampling point.

In certain implementations of the embodiment of the present disclosure, before the step of determining whether the current cell is the expected serving cell that meets the preset load balancing condition according to the overall load data of the co-coverage inter-frequency cell group, inter-frequency cells in the same base station that cover the same area and are available need to be associated to form the co-coverage inter-frequency cell group.

In certain implementations of the embodiment of the present disclosure, the step of balancing the load of the co-coverage inter-frequency cell group according to the determination result may include: if the determination result is yes, taking the current cell as the expected serving cell; or if the determination result is no, selecting an expected serving inter-frequency cell from the co-coverage inter-frequency cell group, and handing the user over from the current cell to the expected serving inter-frequency cell.

That is, in certain implementations, when a user first accesses or is first handed over to a certain cell (the current cell) of a co-coverage inter-frequency cell group, an expected serving cell is determined for the user, and loads of co-coverage inter-frequency cells inside a station are actively balanced by forcing a handover, such that a load accumulation risk is prevented when the loads are low, and dynamic balancing can still be carried out when the loads are high, thereby satisfying a requirement of the inter-frequency cells for dynamic balancing in various load situations, and also realizing rational distribution of the loads of the inter-frequency cells and rational distribution of users in the inter-frequency cells.

In an implementation, the step of selecting the expected serving inter-frequency cell from the co-coverage inter-frequency cell group may include: selecting the expected serving inter-frequency cell according to a balanced cell priority list selected from the co-coverage inter-frequency cell group.

That is, when a user first accesses a certain cell of a co-coverage inter-frequency cell group or is first handed over from another neighboring cell to a certain cell of the co-coverage inter-frequency cell group, whether the cell is an expected serving cell is determined according to overall assessment of the co-coverage inter-frequency cell group. If the cell is not the serving cell that is expected to be used, a balanced cell priority list is selected from the co-coverage inter-frequency cell group for the user, and an expected serving inter-frequency cell is selected according to the balanced cell priority list. If the cell is the serving cell that is expected to be used, a load situation of the co-coverage inter-frequency cell group may be dynamically updated, that is, updating overall load data of the co-coverage inter-frequency cell group.

In an implementation, the step of handing the user over from the current cell to the expected serving inter-frequency cell may include: handing the user over in an inter-frequency manner to a target cell in an inter-frequency handover cell pair in the balanced cell priority list, and the target cell corresponding to successful inter-frequency handover is the expected serving inter-frequency cell.

During cell handover, a source cell and a target cell are referred to as a cell pair, and cells in the co-coverage inter-frequency cell group are of inter-frequency, and the cell pair is therefore referred to as an inter-frequency handover cell pair in the embodiments of the present disclosure.

Certainly, during inter-frequency handover, inter-frequency handover may be performed according to measurement and handover policies. Specifically, the step of handing the user over in the inter-frequency manner to the target cell in the inter-frequency handover cell pair in the balanced cell priority list may include: handing the user over in the inter-frequency manner to the target cell in the inter-frequency handover cell pair according to a preset blind handover policy and according to a priority order in the balanced cell priority list; or measuring the target cell in the inter-frequency handover cell pair according to a preset measurement policy and according to the priority order in the balanced cell priority list, and then handing the user over in the inter-frequency manner to the target cell in the inter-frequency handover cell pair according to a measurement result.

After the step of handing the user over from the current cell to the selected expected serving inter-frequency cell, the method optionally includes: within a preset time period, prohibiting the user from handover in the inter-frequency manner again.

In certain implementations, inter-frequency handover may be performed by using the corresponding measurement policy and handover policy and according to the balanced cell priority list, so that the user is handed over to the expected serving inter-frequency cell. When inter-frequency handover is completed, the load situation of the co-coverage inter-frequency cell group can be dynamically updated. After that, a timer may be set for the user, and a preset time is set via the timer, that is, until the timer expires, the user is prohibited from handover in the co-coverage inter-frequency cell group.

The handover policy may include a blind handover policy and a handover policy based on measurement. That is, if there is a balanced cell for which a handover policy is a blind handover policy (i.e., the balanced cell is the expected serving inter-frequency cell), blind handover is preferentially performed with respect to the balanced cell which is ranked the highest and for which a handover policy is a blind handover policy.

If all the balanced cells use the handover policy based on measurement, inter-frequency point measurement configurations may be sequentially issued according to the balanced cell priority list, that is, inter-frequency handover is sequentially attempted to be performed according to the priority order, until inter-frequency handover succeeds. It is also possible to issue all inter-frequency point measurement configurations in the priority list at one time, where inter-frequency priorities are embodied in the inter-frequency point measurement configurations by offsetFreq or cellIndividualOffset, so that the inter-frequency cell that is the first to meet a condition is selected for inter-frequency handover. In addition, in order to distinguish such handover from normal handover, a trigger may be separately set, for example, a load balancing trigger between co-coverage inter-frequency cells. In principle, the balanced cell cannot reject this type of handover.

The handover policy is mainly used for determining whether blind handover (that does not need measurement) or handover based on measurement is performed for each inter-frequency handover cell pair. When the coverage of the target cell is larger than that of the source cell and the target cell can provide a service for the user, blind handover can be selected. In order to ensure the accuracy of blind handover, in addition to the relative coverage size, it is also possible to take a location into consideration, estimate cell signal strength, etc., for example, performing blind handover merely for users at near and middle points. Blind handover may also be determined according to historical handover statistics. When it is uncertain that blind handover can succeed, the handover policy based on measurement is selected. When handover based on measurement is selected, it needs to determine a corresponding measurement policy. A handover policy selection algorithm is not limited in the embodiments of the present disclosure.

The measurement policy mainly includes a common measurement parameter and a specified measurement parameter. The common measurement parameter mainly includes a hysteresis amount, a trigger cycle, report parameters such as a report interval and the number of times of report, etc., and a suitable parameter value may be selected according to a load situation. The specified measurement parameter mainly includes a measurement object parameter of the inter-frequency handover cell pair such as offsetFreq or cellIndividualOffset, that is, suitable offsetFreq or cellIndividualOffset is selected according to relative loads of the inter-frequency handover cell pair, so that the priority order is embodied during inter-frequency handover. A measurement policy selection algorithm is not limited in the embodiments of the present disclosure.

On the premise of correct combination logic, the above-mentioned implementations can be combined in any way to form a load balancing method. The method in the embodiments of the present disclosure is not only suitable for an LTE multi-frequency network, but also suitable for a multi-frequency network of an LTE subsequent evolution mobile communication system.

### Embodiment Two

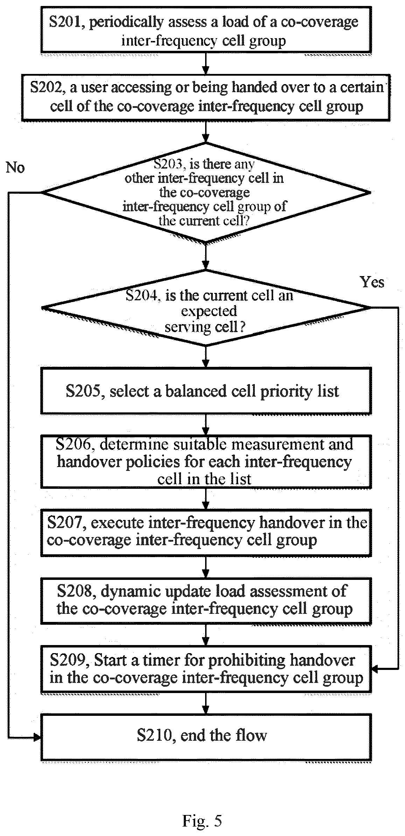

On the basis of a combination of the implementations in Embodiment One, it is provided an alternative load balancing method. The embodiment of the present disclosure mainly aims to solve the problem of dynamic load balancing among a plurality of co-coverage inter-frequency cells inside a base station (also referred to as within a station). In the embodiment of the present disclosure, these co-coverage inter-frequency cells inside a station are defined as a co-coverage inter-frequency cell group, such that a method for centralized load assessment and active load balancing of a co-coverage inter-frequency cell group is provided, where centralized load assessment is performed for inter-frequency cells of the co-coverage inter-frequency cell group, and an expected serving cell is actively selected and determined as a serving cell for a user when the user first accesses or is first handed over to a certain cell of the inter-frequency cell group, and thus, a load accumulation risk is prevented when the loads are low, and dynamic balancing can still be performed when the loads are high. In detail, as shown in Fig. 5, the method may include the following steps S201 to S210. At step S201, a load of each inter-frequency cell of a co-coverage inter-frequency cell group is periodically assessed and updated to obtain overall load data of the co-coverage inter-frequency cell group. At step S202, a user first accesses a certain cell (i.e. a current cell) of the co-coverage inter-frequency cell group or is first handed over from another neighboring cell to a certain cell (i.e. a current cell) of the co-coverage inter-frequency cell group. At step S203, if there is no other inter-frequency cell in the co-coverage inter-frequency cell group of the cell, then proceeding to step S210. At step S204, it is determined whether the current cell is an expected serving cell according to a centralized load assessment result, and if so, proceeding to step S208. At step S205, if the current cell is not the expected serving cell, a balanced cell priority list is selected from the co-coverage inter-frequency cell group. At step S206, for each inter-frequency cell pair in the balanced cell priority list, corresponding measurement and handover policies are determined according to inter-frequency handover cell pair. At step S207, inter-frequency handover is performed in each inter-frequency handover cell pair of the co-coverage inter-frequency cell group. At step S208, load assessment of each inter-frequency cell of the co-coverage inter-frequency cell group is dynamically updated. At step S209, a timer is started, and the user is prohibited from handover in the co-coverage inter-frequency cell group until the time expires. At step S210, the flow is ended.

### Embodiment Three

The embodiment of the present disclosure provides a load balancing apparatus. Based on a similar concept to those of Embodiment One and Embodiment Two, during implementation, Embodiment One to Embodiment Three can take reference to one another for detailed implementation, and also achieve similar technical effects. The apparatus in the embodiment of the present disclosure may include a co-coverage inter-frequency cell group management module, a co-coverage inter-frequency cell group load assessment module, a co-coverage inter-frequency cell group balanced cell list selection module, a co-coverage inter-frequency cell group balancing execution module and a co-coverage inter-frequency cell group measurement and handover policy module. In order to facilitate control over a whole flow, a co-coverage inter-frequency cell group master control module can certainly be added to coordinate a whole balancing process. The above-mentioned modules can certainly be added or omitted for realizing the apparatus, so that an alternative load balancing apparatus can be obtained.

The load balancing apparatus in the embodiment of the present disclosure mainly aims to a load of a co-coverage inter-frequency cell group, and the co-coverage inter-frequency cell group is thus added to the name of each module in the embodiments of the present disclosure. However, in the embodiment of the present disclosure, modules, regardless of being added with the co-coverage inter-frequency cell group or without the co-coverage inter-frequency cell group, indicate the same module or component, for example, a management module is the same as the co-coverage inter-frequency cell group management module, and a load assessment module is the same as the co-coverage inter-frequency cell group load assessment module.

In certain implementations of the embodiment of the present disclosure, the apparatus may include: a co-coverage inter-frequency cell group management module configured to trigger a load assessment module for assessment when a user accesses or is handed over to a current cell of a co-coverage inter-frequency cell group in the same base station; a co-coverage inter-frequency cell group load assessment module configured to assess and determine , under the trigger of the management module, whether the current cell is an expected serving cell that meets a preset load balancing condition; for example, determining , according to overall load data of the co-coverage inter-frequency cell group, whether the current cell is the expected serving cell that meets the preset load balancing condition, where centralized load assessment (referred to as load assessment for short) may be performed on all inter-frequency cells in the co-coverage inter-frequency cell group to obtain the overall load data of the co-coverage inter-frequency cell group; and a co-coverage inter-frequency cell group balancing execution module configured to balance a load of the co-coverage inter-frequency cell group according to a determination result of the load assessment module.

The co-coverage inter-frequency cell group management module is further configured to associate inter-frequency cells that cover the same area and are available to form the co-coverage inter-frequency cell group.

In an implementation, the co-coverage inter-frequency cell group management module is configured to manage all inter-frequency cells inside a base station that cover the same area, and associate the inter-frequency cells that are available to form one co-coverage inter-frequency cell group. When the inter-frequency cells are added or deleted and available states of the inter-frequency cells change, the co-coverage inter-frequency cell group is dynamically maintained, and the co-coverage inter-frequency cell group load assessment module is notified to dynamically update load assessment of the co-coverage inter-frequency cell group.

The co-coverage inter-frequency cell group master control module is an alternative master control module, and is configured to generally control the overall execution of the apparatus. If this module is not used, the process control function can be allocated to other modules.

When a user first accesses or is first handed over to a certain cell of the co-coverage inter-frequency cell group, the co-coverage inter-frequency cell group master control module is started.

The co-coverage inter-frequency cell group master control module firstly acquires the co-coverage inter-frequency cell group of the current cell from the co-coverage inter-frequency cell group management module, and if there is no other cell in the co-coverage inter-frequency cell group, that is, the co-coverage inter-frequency cell group only includes the current cell, the flow is ended.

The co-coverage inter-frequency cell group master control module then requests the co-coverage inter-frequency cell group load assessment module to determine whether the current cell is an expected serving cell.

If the current cell is the expected serving cell, a balancing process is not required, and the current cell is taken as the expected serving cell. Otherwise, if the current cell is not the expected serving cell, an expected serving inter-frequency cell is selected from the co-coverage inter-frequency cell group, and the user is handed over from the current cell to the selected expected serving inter-frequency cell.

Finally, the co-coverage inter-frequency cell group master control module can notify the co-coverage inter-frequency cell group load assessment module to update load assessment. Moreover, a timer may be set for the user, and the user is prohibited from handover in the co-coverage inter-frequency cell group until the time expires.

In certain implementations in the embodiment of the present disclosure, the apparatus may further include a co-coverage inter-frequency cell group balanced cell list selection module, which is configured to select the expected serving inter-frequency cell according to a balanced cell priority list selected from the co-coverage inter-frequency cell group, when the load assessment module determines that the current cell is not an expected serving cell that meets a preset load balancing condition. For example, the user is handed over in the inter-frequency manner to the target cell in the inter-frequency handover cell pair according to a preset blind handover policy and according to a priority order in the balanced cell priority list, or the target cell in the inter-frequency handover cell pair is measured according to the priority order in the balanced cell priority list, and the user is then handed over in the inter-frequency manner to the target cell in the inter-frequency handover cell pair according to a measurement result.

That is, if the current cell is not the expected serving cell, the co-coverage inter-frequency cell group master control module or the co-coverage inter-frequency cell group management module requests the co-coverage inter-frequency cell group balanced cell list selection module to select the balanced cell priority list from the co-coverage inter-frequency cell group, and then requests the co-coverage inter-frequency cell group balancing execution module to execute inter-frequency handover between the inter-frequency cells of the co-coverage inter-frequency cell group to hand the user over to the expected serving cell (i.e. expected serving inter-frequency cell).

In an implementation, the co-coverage inter-frequency cell group load assessment module may be configured to assess a load of each inter-frequency cell of the co-coverage inter-frequency cell group. As for the definition of load assessment, different load assessment definitions can be used according to different scenarios.

For example, simple load definition approaches may include: 1) a user quantity per bandwidth. Assuming that user behavior models are the same, a user quantity supported by the same bandwidth should be substantially consistent, the user quantity is divided by the bandwidth to obtain the user quantity per bandwidth, and the ratio is taken as a load definition. The approaches may also include: 2) a PRB utilization rate. A PRB utilization rate of a cell is taken as a load definition.

In order to realize rational distribution of users in inter-frequency cells, it is also possible to adopt finer assessment, for example, taking user locations into consideration on the basis of the user quantity per bandwidth, that is, adding a location weight, where location information may be represented by using TA. A load may also be defined by combining several methods, for example, adding a weight to each method to obtain a load definition after comprehensive consideration.

What corresponds to the load definition is a load assessment algorithm, and the embodiment of the present disclosure does not limit a load assessment algorithm. For example, it is possible to take an appropriate design by using a filter, selecting a suitable smoothing parameter, so as to avoid abnormal fluctuation of a load sampling point.

The co-coverage inter-frequency cell group measurement and handover policy module provides measurement and handover policies for a source cell and a target cell of the co-coverage inter-frequency cell group, the source cell and the target cell are often referred to as a cell pair, and cells in the co-coverage inter-frequency cell group are of inter-frequency, and the cell pair may therefore be referred to as an inter-frequency handover cell pair.

The handover policy is mainly intended for determining whether blind handover (that does not need measurement) or handover based on measurement is performed for each inter-frequency handover cell pair. When the coverage of the target cell is larger than that of the source cell and the target cell can provide a service for the user, blind handover can be selected. In order to ensure the accuracy of blind handover, in addition to the relative coverage size, it is also possible to take a location into consideration, estimate cell signal strength, etc., for example, performing blind handover merely for users at near and middle points. Blind handover may also be determined according to historical handover statistics. When it is uncertain that blind handover can succeed, the handover policy based on measurement is selected. When handover based on measurement is selected, it needs to determine a corresponding measurement policy. The embodiment of the present disclosure does not limit a handover policy selection algorithm.

The measurement policy mainly includes a common measurement parameter and a specified measurement parameter. The common measurement parameter mainly includes a hysteresis amount, a trigger cycle, report parameters such as a report interval and the number of times of report, etc., and a suitable parameter value may be selected according to a load situation. The specified measurement parameter mainly includes a measurement object parameter of the inter-frequency handover cell pair such as offsetFreq or cellIndividualOffset, that is, suitable offsetFreq or cellIndividualOffset is selected according to relative loads of the inter-frequency handover cell pair, so that the priority order is embodied during inter-frequency handover.

The co-coverage inter-frequency cell group balanced cell list selection module may select and determine a balanced cell priority list from the co-coverage inter-frequency cell group, and requests the co-coverage inter-frequency cell group measurement and handover policy module to provide corresponding measurement and handover policies.

When a balanced cell list is selected for the user, a selection and sorting algorithm is not limited by the embodiment of the present disclosure. During implementation, load values of all the inter-frequency cells may be simply sorted. Factors such as relative coverage of the inter-frequency cells and user locations in the inter-frequency cells, and estimated reference signal strength can be taken into consideration. For example, when there are a plurality of inter-frequency cells with similar load values, the priority of the inter-frequency cell having high reference signal strength that is estimated according to the user locations can be increased, such that better service experience can be provided for the user.

Hence, load balancing between the inter-frequency cells can be easily realized and rational user distribution in each inter-frequency cell can also be easily realized by selecting a rational load definition and a rational balanced cell selection algorithm.

When the balanced cell priority list is selected, the co-coverage inter-frequency cell group measurement and handover policy module is requested to provide specified measurement and handover policies for each inter-frequency handover cell pair in the list, and a common measurement policy.

The co-coverage inter-frequency cell group balancing execution module executes inter-frequency handover between the inter-frequency cells of the co-coverage inter-frequency cell group according to the balanced cell priority list and the corresponding measurement and handover policies.

If there is a balanced cell for which a handover policy is a blind handover policy (i.e., the balanced cell is the expected serving inter-frequency cell), blind handover is preferentially performed with respect to the balanced cell which is ranked the highest and for which a handover policy is a blind handover policy.

If all the balanced cells use the handover policy based on measurement, inter-frequency point measurement configurations may be sequentially issued according to the balanced cell priority list, that is, inter-frequency handover is sequentially attempted to be performed according to the priority order, until inter-frequency handover succeeds. It is also possible to issue all inter-frequency point measurement configurations in the priority list at one time, where inter-frequency priorities are embodied in the inter-frequency point measurement configurations by offsetFreq or cellIndividualOffset, so that the inter-frequency cell that is the first to meet a condition is selected for inter-frequency handover. In addition, in order to distinguish such handover from normal handover, a trigger may be separately set, for example, a load balancing trigger between co-coverage inter-frequency cells. In principle, the balanced cell cannot reject this type of handover.

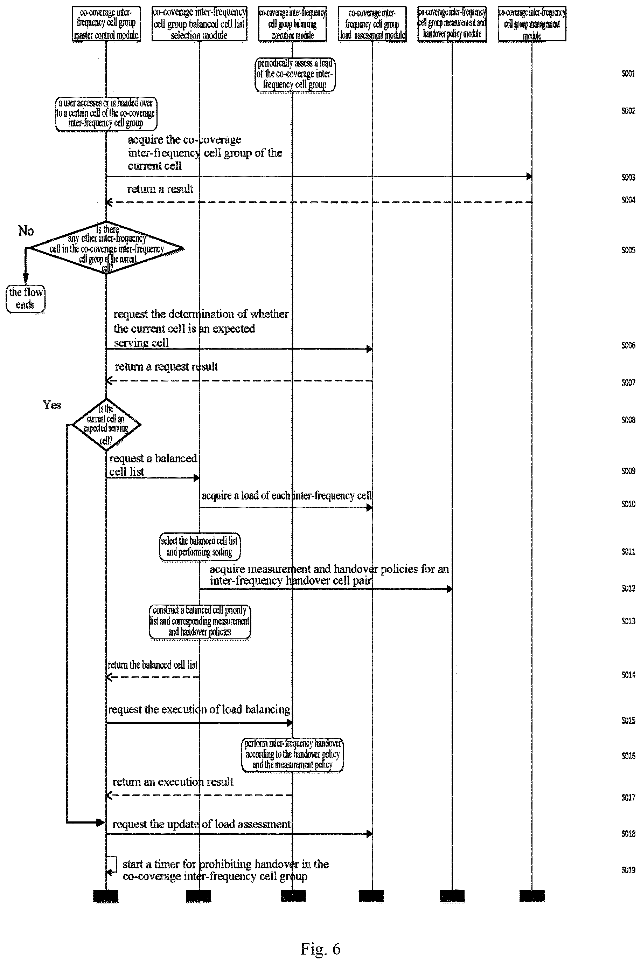

On the basis of the implementations above, taking a load balancing apparatus provided with all the above-mentioned modules as an example hereinafter, centralized load assessment and active load balancing of the co-coverage inter-frequency cell group are completed by way of an interaction flow of the modules. With reference to Fig. 6, the interaction flow may include the following steps S001 to S019. At S001, a co-coverage inter-frequency cell group load assessment module periodically performs load assessment. At S002, a user first accesses a certain cell of a co-coverage inter-frequency cell group or is first handed over to a certain cell of the co-coverage inter-frequency cell group. At S003, the co-coverage inter-frequency cell group master control module acquires the co-coverage inter-frequency cell group of the current cell from a co-coverage inter-frequency cell group management module. At S004, the co-coverage inter-frequency cell group management module returns a response to the co-coverage inter-frequency cell group master control module. At S005, if the co-coverage inter-frequency cell group master control module determines that there is no other inter-frequency cell in the co-coverage inter-frequency cell group of the cell, the flow is ended.

At S006, the co-coverage inter-frequency cell group master control module initiates a request to the co-coverage inter-frequency cell group load assessment module to determine whether the current cell is an expected serving cell. At S007, the co-coverage inter-frequency cell group load assessment module returns a response to the co-coverage inter-frequency cell group master control module. At S008, by the co-coverage inter-frequency cell group master control module, according to a response result, and if the current cell is the expected serving cell, the flow proceeds to S018. At S009, if the current cell is not the expected serving cell, the co-coverage inter-frequency cell group master control module initiates a request to a co-coverage inter-frequency cell group balanced cell list selection module to acquire a balanced cell list. At S010, a request is initiated to the co-coverage inter-frequency cell group load assessment module to acquire a load of each inter-frequency cell. At S011, a co-coverage inter-frequency cell group balanced cell list selection module selects a balanced cell list according to specified algorithm and performs sorting according to priorities. At S012, the co-coverage inter-frequency cell group balanced cell list selection module initiates a request to a co-coverage inter-frequency cell group measurement and handover policy module to acquire measurement and handover policies for each inter-frequency cell in the balanced cell list according to inter-frequency handover cell pairs. At S013, the co-coverage inter-frequency cell group balanced cell list selection module constructs a balanced cell priority list and corresponding measurement and handover policies. At S014, the co-coverage inter-frequency cell group balanced cell list selection module returns the balanced cell list to the co-coverage inter-frequency cell group master control module. At S015, the co-coverage inter-frequency cell group master control module initiates a request to a co-coverage inter-frequency cell group balancing execution module to execute balancing. At S016, the co-coverage inter-frequency cell group balancing execution module executes inter-frequency handover between the inter-frequency cells of the co-coverage inter-frequency cell group according to the balanced cell list. At S017, the co-coverage inter-frequency cell group balancing execution module returns an execution result to the co-coverage inter-frequency cell group master control module. At S018, the co-coverage inter-frequency cell group master control module requests the co-coverage inter-frequency cell group load assessment module to update load assessment. At S019, the co-coverage inter-frequency cell group master control module starts a timer for the user, and prohibits the user from handover in the co-coverage inter-frequency cell group until the time expires.

### Embodiment Four

The embodiment of the present disclosure provides a load balancing device. The device includes a memory and a processor, the memory stores a computer program for load balancing, and the processor executes the computer program to implement the steps of the method according to any one of Embodiment One and Embodiment Two.

### Embodiment Five

The embodiment of the present disclosure provides a computer-readable storage medium. The storage medium stores a computer program for load balancing, and the computer program can be executed by at least one processor to implement the steps of the method according to any one of Embodiment One and Embodiment Two.

During implementation, reference can be made to the embodiments above for Embodiment Four and Embodiment Five, which can achieve corresponding technical effects.

By utilizing the present disclosure, dynamic load balancing among inter-frequency cells of co-coverage inter-frequency cells in the same base station is effectively realized. In the embodiments above, loads of inter-frequency cells in a co-coverage inter-frequency cell group can be actively balanced, and thus, a load accumulation risk is prevented when the loads are low, and dynamic balancing can still be carried out when the loads are high, thereby satisfying a requirement of the inter-frequency cells for dynamic balancing in various load situations, and also realizing rational distribution of the loads of the inter-frequency cells and rational distribution of users in the inter-frequency cells, so as to effective realize dynamic load balancing among the inter-frequency cells of the co-coverage inter-frequency cells.

It should be noted that, as used herein, the term "comprise", "include" or any variant thereof is intended to encompass all non-exclusive inclusion, so that a process, method, article or device including a series of elements not only includes those elements, but also includes other elements that are not explicitly listed, or elements inherent to the process, method, article or device. Without particular limitation, an element defined by "including a/an..." does not exclude other identical elements existing in the process, method, article, or device that includes the element.

The serial numbers of the foregoing embodiments of the present disclosure are for descriptive purposes only, but not represent the advantages and disadvantages of the embodiments.

Through the description of the above embodiments, those skilled in the art may be clearly aware that the methods according to the above embodiments can be implemented by means of software plus necessary general hardware platforms, and of course may also be implemented by hardware, but in many cases the former is better. Based on such an understanding, the technical solutions of the present disclosure in essence or those parts of the technical solutions that contribute to the existing technologies may be embodied in the form of a software product. Such a computer software product may be stored in a storage medium (such as ROM/RAM, magnetic disc, optical disc) and include a plurality of instructions to enable a terminal device (which may be a mobile phone, a computer, a server, an air conditioner, or a network device, etc.) to execute the method described in each of the embodiments of the present disclosure.

The embodiments of the present disclosure are described above with reference to the drawings. However, the present disclosure is not limited to the aforementioned particular embodiments. The aforementioned particular embodiments are merely for illustration rather than limitation. The scope of the invention is only limited by the claims.

## Claims

1. A load balancing method, the method comprises steps of determining (S101), when a user accesses or is handed over to a current cell of a co-coverage inter-frequency cell group in the same base station, whether the current cell is an expected serving cell that meets a preset load balancing condition; and
balancing (S102), according to a determination result, a load of the co-coverage inter-frequency cell group,
**characterized in that**:
the step of determining whether the current cell is the expected serving cell that meets the preset load balancing condition further comprises:
determining, according to overall load data of the co-coverage inter-frequency cell group, whether the current cell is the expected serving cell that meets the preset load balancing condition.

2. The method according to claim 1, **characterized in that**, before the step of determining whether the current cell is the expected serving cell that meets the preset load balancing condition according to the overall load data of the co-coverage inter-frequency cell group, the method further comprises:
associating inter-frequency cells in the same base station that cover the same area and are available to form the co-coverage inter-frequency cell group; and
performing centralized load assessment on all the inter-frequency cells in the co-coverage inter-frequency cell group to obtain the overall load data of the co-coverage inter-frequency cell group.

3. The method according to claim 1, **characterized in that**, the step of balancing the load of the co-coverage inter-frequency cell group according to the determination result further comprises:
when the determination result is yes, taking the current cell as the expected serving cell; or
when the determination result is no, selecting an expected serving inter-frequency cell from the co-coverage inter-frequency cell group, and handing the user over from the current cell to the selected expected serving inter-frequency cell.

4. The method according to claim 3, **characterized in that**, the step of selecting the expected serving inter-frequency cell from the co-coverage inter-frequency cell group further comprises:
selecting the expected serving inter-frequency cell according to a balanced cell priority list selected from the co-coverage inter-frequency cell group.

5. The method according to claim 4, **characterized in that**, the step of handing the user over from the current cell to the selected expected serving inter-frequency cell further comprises:
handing the user over in an inter-frequency manner to a target cell in an inter-frequency handover cell pair in the balanced cell priority list, wherein the target cell corresponding to successful inter-frequency handover is the expected serving inter-frequency cell.

6. The method according to claim 5, **characterized in that**, the step of handing the user over in the inter-frequency manner to the target cell in the inter-frequency handover cell pair in the balanced cell priority list further comprises:
handing the user over in the inter-frequency manner to the target cell in the inter-frequency handover cell pair according to a preset blind handover policy and according to a priority order in the balanced cell priority list, or
measuring the target cell in the inter-frequency handover cell pair according to a preset measurement policy and according to the priority order in the balanced cell priority list, and then handing the user over in the inter-frequency manner to the target cell in the inter-frequency handover cell pair according to a measurement result.

7. A load balancing device, comprising a memory and a processor, wherein the memory stores a computer program for load balancing, and the processor executes the computer program to implement the steps of the method according to any one of claims 1-6.

8. A computer-readable storage medium, the storage medium stores a computer program for load balancing, and the computer program is executable by at least one processor to implement the steps of the method according to any one of claims 1-6.

## Patentansprüche

1. Lastausgleichsverfahren, wobei das Verfahren die folgenden Schritte umfasst:
Bestimmen (S101), wenn ein Benutzer auf eine aktuelle Zelle einer Interfrequenz-Zellengruppe mit gemeinsamer Abdeckung in derselben Basisstation zugreift oder an diese übergeben wird, ob die aktuelle Zelle eine erwartete bedienende Zelle ist, welche eine vorgegebene Lastausgleichsbedingung erfüllt; und
Ausgleichen (S102), gemäß einem Bestimmungsergebnis, einer Last der Interfrequenz-Zellengruppe mit gemeinsamer Abdeckung,
**dadurch gekennzeichnet, dass**:
der Schritt des Bestimmens, ob die aktuelle Zelle die erwartete bedienende Zelle ist, welche die vorgegebene Lastausgleichsbedingung erfüllt, ferner umfasst:
Bestimmen, gemäß Gesamtlastdaten der Interfrequenz-Zellengruppe mit gemeinsamer Abdeckung, ob die aktuelle Zelle die erwartete bedienende Zelle ist, welche die vorgegebene Lastausgleichsbedingung erfüllt.

2. Verfahren nach Anspruch 1, **dadurch gekennzeichnet, dass** vor dem Schritt des Bestimmens, ob die aktuelle Zelle die erwartete bedienende Zelle ist, welche die vorgegebene Lastausgleichsbedingung erfüllt, gemäß den Gesamtlastdaten der Interfrequenz-Zellengruppe mit gemeinsamer Abdeckung, das Verfahren ferner umfasst:
Zuordnen von Interfrequenz-Zellen in derselben Basisstation, welche denselben Bereich abdecken und verfügbar sind, um die Interfrequenz-Zellengruppe mit gemeinsamer Abdeckung zu bilden; und
Durchführen einer zentralisierten Lastbewertung für alle Interfrequenz-Zellen in der Interfrequenz-Zellgruppe mit gemeinsamer Abdeckung, um die Gesamtlastdaten der Interfrequenz-Zellengruppe mit gemeinsamer Abdeckung zu erhalten.

3. Verfahren nach Anspruch 1, **dadurch gekennzeichnet, dass** der Schritt des Ausgleichens der Last der Interfrequenz-Zellengruppe mit gemeinsamer Abdeckung gemäß dem Bestimmungsergebnis ferner umfasst:
wenn das Bestimmungsergebnis Ja ist, Nehmen der aktuellen Zelle als die erwartete bedienende Zelle; oder
wenn das Bestimmungsergebnis Nein ist, Auswählen einer erwarteten bedienenden Interfrequenz-Zelle aus der Interfrequenz-Zellengruppe mit gemeinsamer Abdeckung und Übergeben des Benutzers von der aktuellen Zelle an die ausgewählte erwartete bedienende Interfrequenz-Zelle.

4. Verfahren nach Anspruch 3, **dadurch gekennzeichnet, dass** der Schritt des Auswählens der erwarteten bedienenden Interfrequenz-Zelle aus der Interfrequenz-Zellengruppe mit gemeinsamer Abdeckung ferner umfasst:
Auswählen der erwarteten bedienenden Interfrequenz-Zelle gemäß einer aus der Interfrequenz-Zellengruppe mit gemeinsamer Abdeckung ausgewählten ausgeglichenen Zellenprioritätenliste.

5. Verfahren nach Anspruch 4, **dadurch gekennzeichnet, dass** der Schritt des Übergebens des Benutzers von der aktuellen Zelle an die ausgewählte erwartete bedienende Interfrequenz-Zelle ferner umfasst:
Übergeben des Benutzers in einer Interfrequenz-Weise an eine Zielzelle in einem Interfrequenz-Übergabe-Zellenpaar in der ausgeglichenen Zellenprioritätenliste, wobei die Zielzelle, welche einer erfolgreichen Interfrequenz-Übergabe entspricht, die erwartete bedienende Interfrequenz-Zelle ist.

6. Verfahren nach Anspruch 5, **dadurch gekennzeichnet, dass** der Schritt des Übergebens des Benutzers in der Interfrequenz-Weise an die Zielzelle in dem Interfrequenz-Übergabe-Zellenpaar in der ausgeglichenen Zellenprioritätenliste ferner umfasst:
Übergeben des Benutzers in der Interfrequenz-Weise an die Zielzelle in dem Interfrequenz-Übergabe-Zellenpaar gemäß einer vorgegebenen Blindübergabe-Richtlinie und gemäß einer Prioritätenreihenfolge in der ausgeglichenen Zellenprioritätenliste oder
Messen der Zielzelle in dem Interfrequenz-Übergabe-Zellenpaar gemäß einer vorgegebenen Messrichtlinie und gemäß der Prioritätenreihenfolge in der ausgeglichenen Zellenprioritätenliste und dann Übergeben des Benutzers in der Interfrequenz-Weise an die Zielzelle in dem Interfrequenz-Übergabe-Zellenpaar gemäß dem Messergebnis.

7. Lastausgleichsvorrichtung, umfassend einen Speicher und einen Prozessor, wobei der Speicher ein Computerprogramm für einen Lastausgleich speichert und der Prozessor das Computerprogramm ausführt, um die Schritte des Verfahrens nach einem der Ansprüche 1-6 zu implementieren.

8. Computerlesbares Speichermedium, wobei das Speichermedium ein Computerprogramm für einen Lastausgleich speichert und das Computerprogramm durch wenigstens einen Prozessor ausführbar ist, um die Schritte des Verfahrens nach einem der Ansprüche 1-6 zu implementieren.

## Revendications

1. Procédé d'équilibrage de charge, le procédé comprenant les étapes consistant à
déterminer (S101), lorsqu'un utilisateur accède ou est transféré vers une cellule actuelle d'un groupe de cellules inter-fréquences de co-couverture dans la même station de base, si la cellule actuelle est une cellule de desserte attendue qui répond à une condition d'équilibrage de charge prédéfinie ; et
équilibrer (S102), selon un résultat de détermination, une charge du groupe de cellules inter-fréquences de co-couverture,
**caractérisé en ce que** :
l'étape consistant à déterminer si la cellule actuelle est la cellule de desserte attendue qui répond à la condition d'équilibrage de charge prédéfinie comprend en outre l'étapes consistant à :
déterminer, en fonction de données de charge globale du groupe de cellules inter-fréquences de co-couverture, si la cellule actuelle est la cellule de desserte attendue qui répond à la condition d'équilibrage de charge prédéfinie.

2. Procédé selon la revendication 1, **caractérisé en ce que**, avant de déterminer si la cellule actuelle est la cellule de desserte attendue qui répond à la condition d'équilibrage de charge prédéfinie en fonction des données de charge globale du groupe de cellules inter-fréquences de co-couverture, le procédé comprend en outre les étapes consistant à :
associer des cellules inter-fréquences dans la même station de base qui couvrent la même zone et sont disponibles pour former le groupe de cellules inter-fréquences de co-couverture ; et
effectuer une évaluation de charge centralisée sur toutes les cellules inter-fréquences du groupe de cellules inter-fréquences de co-couverture pour obtenir les données de charge globales du groupe de cellules inter-fréquences de co-couverture.

3. Procédé selon la revendication 1, **caractérisé en ce que** l'étape d'équilibrage de la charge du groupe de cellules inter-fréquences de co-couverture en fonction du résultat de détermination comprend en outre l'étape consistant à :
lorsque le résultat de détermination est oui, prendre la cellule actuelle en tant que cellule de desserte attendue ; ou
lorsque le résultat de détermination est non, sélectionner une cellule inter-fréquence de desserte attendue à partir du groupe de cellules inter-fréquences de co-couverture, et transférer l'utilisateur de la cellule actuelle à la cellule inter-fréquence de desserte attendue sélectionnée.

4. Procédé selon la revendication 3, **caractérisé en ce que** l'étape de sélection de la cellule inter-fréquence de desserte attendue parmi le groupe de cellules inter-fréquences de co-couverture comprend en outre l'étapes consistant à :
sélectionner la cellule inter-fréquence de desserte attendue en fonction d'une liste de priorités de cellules équilibrées sélectionnées dans le groupe de cellules inter-fréquence de co-couverture.

5. Procédé selon la revendication 4, **caractérisé en ce que** l'étape de transfert de l'utilisateur de la cellule courante vers la cellule inter-fréquence de desserte attendue sélectionnée comprend en outre l'étape consistant à :
transférer l'utilisateur d'une manière à inter-fréquence à une cellule cible dans une paire de cellules de transfert inter-fréquences dans la liste de priorité de cellules équilibrées, dans lequel la cellule cible correspondant au transfert inter-fréquence réussi est la cellule inter-fréquence de desserte attendue.

6. Procédé selon la revendication 5, **caractérisé en ce que** l'étape de transfert de l'utilisateur d'une manière à inter-fréquence vers la cellule cible de la paire de cellules de transfert inter-fréquences de la liste de priorités de cellules équilibrées comprend en outre l'étape consistant à :
transférer l'utilisateur d'une manière à inter-fréquence vers la cellule cible dans la paire de cellules de transfert inter-fréquences selon une politique de transfert aveugle prédéfinie et selon un ordre de priorité dans la liste de priorités de cellules équilibrées, ou
mesurer la cellule cible dans la paire de cellules de transfert inter-fréquences selon une politique de mesure prédéfinie et selon l'ordre de priorité dans la liste de priorités de cellules équilibrées, puis transférer l'utilisateur d'une manière à inter-fréquence à la cellule cible dans la paire de cellules de transfert inter-fréquences selon un résultat de mesure.

7. Dispositif d'équilibrage de charge, comprenant une mémoire et un processeur, dans lequel la mémoire stocke un programme informatique pour un équilibrage de charge, et le processeur exécute le programme informatique pour mettre en œuvre les étapes du procédé selon l'une quelconque des revendications 1 à 6.

8. Support de stockage lisible par ordinateur, le support de stockage stockant un programme informatique pour un équilibrage de charge, et le programme informatique est exécutable par au moins un processeur pour mettre en œuvre les étapes du procédé selon l'une quelconque des revendications 1 à 6.
